(19) Europäisches Patentamt / European Patent Office / Office européen des brevets

(11) **EP 2 556 231 B1**

(12) **EUROPEAN PATENT SPECIFICATION**

(45) Date of publication and mention of the grant of the patent:
**25.12.2019  Bulletin 2019/52**

(21) Application number: **11714521.9**

(22) Date of filing: **08.04.2011**

(51) Int Cl.:
*F02D 41/22* (2006.01)     *F02D 35/02* (2006.01)
*F02D 41/12* (2006.01)     *F02D 41/14* (2006.01)
*F02D 41/24* (2006.01)

(86) International application number:
**PCT/EP2011/055506**

(87) International publication number:
**WO 2011/124680 (13.10.2011 Gazette 2011/41)**

(54) **Diagnosis device and method using an in-cylinder pressure sensor in an internal combustion engine**

Diagnosevorrichtung und -verfahren mit Hilfe eines Drucksensors in einem Zylinder  eines Verbrennungsmotors

Dispositif et procédé de diagnostic utilisant un capteur de pression dans un cylindre pour moteur à combustion interne

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority:  **08.04.2010  EP 10159322**

(43) Date of publication of application:
**13.02.2013  Bulletin 2013/07**

(73) Proprietor: **Delphi Automotive Systems Luxembourg S.A.**
**4940 Baracharage (LU)**

(72) Inventors:
• **GUERRASSI, Noureddine**
  **F-41350 Vineuil (FR)**
• **ALLEZY, Pierre**
  **F-41370 Talcy (FR)**

(74) Representative: **Delphi France SAS**
**c/o Delphi Technologies**
**Campus Saint Christophe**
**Bâtiment Galilée 2**
**10, avenue de l'Entreprise**
**95863 Cergy Pontoise Cedex (FR)**

(56) References cited:
EP-A2- 0 657 729     WO-A1-02/101220
WO-A2-02/095191     DE-A1-102004 048 330
GB-A- 2 192 028     US-A- 5 554 801
US-A- 5 648 602

• HOUNTALAS D T ET AL: "Experimental investigation to develop a methodology for estimating the compression condition of DI Diesel engines", ENERGY CONVERSION AND MANAGEMENT, ELSEVIER SCIENCE PUBLISHERS, OXFORD, GB, vol. 47, no. 1, 1 January 2006 (2006-01-01), pages 1-18, XP025067033, ISSN: 0196-8904, DOI: DOI:10.1016/J.ENCONMAN.2005.04.001 [retrieved on 2006-01-01]
• YLVA NILSSON ET AL: "Determining Tdc Position Using Symmetry and Other Methods", 1 March 2004 (2004-03-01), MODELLING OF SPARK IGNITION ENGINES, SAE INTERNATIONAL, US, PAGE(S) 247 - 256, XP008097935, ISBN: 978-0-7680-1366-5 the whole document

## Description

Field of the Invention

This invention relates to a vehicle diagnosis device and method. In particular, the present invention relates to a diagnosis unit for diagnosing faults in a fuel delivery system of a vehicle that cause variations in exhaust emission levels. The invention extends to a method of diagnosing faults in the fuel delivery system and to a method of calibrating such a device/method.

Background of the Invention

With the introduction of stricter emission regulations (particularly in the USA), on-board diagnostic (OBD) requirements have emerged aimed at indicating faults causing excessive vehicle emission levels (emission threshold based diagnosis). These requirements include identification of the source of the fault for a quick and guided repair of the problem.

One of the systems requiring fault indication is the vehicle's fuel delivery system. Regulations require diagnosis of fuel injection quantity, pressure and timing fault types which may cause either an increase/decrease in the quality/quantity of combustion and thus a variation in the emission levels. It is noted that any fault diagnosis system/method needs to work reliably across the full range of operation of a vehicle's engine (speed and load) and be robust to variations in ambient conditions, driving conditions and style and fuel quality.

Variations in the fuel injection quantity, cylinder pressure and injection timing (of which misfire is an extreme case) cause a change in the rotational speed of the engine crankshaft. Current crank (shaft) speed misfire diagnostic methods exploit this by comparing the average engine speed over one cylinder to the next. These methods vary in the number of crank teeth over which the average engine speed is calculated, but the principle remains the same in that the diagnosis is made by detecting when the misfiring of a cylinder causes a deceleration in its rotational speed relative to the adjacent cylinder(s) (Note: adjacent in this context means adjacent in the firing order and not necessarily physically adjacent).

Accelerometers (referred to as "knock" sensors) have also been widely used for cylinder misfire detection, with the knock sensor output being fed back to the engine control unit which then compensates for the misfire by adjusting operation of the other cylinders.

Diagnosis techniques such as those described above typically rely on the use of a number of different sensor devices, some of which may be bespoke to the particular diagnosis method.

Document WO 02/101 220 A1 discloses a diagnosis method, which is determining a TDC (top-dead-centre) offset value, i.e. the difference between a target TDC and a determined TDC, wherein the TDC is determined with the help of a cylinder pressure sensor.

It is an object of the present invention to provide a diagnostic system or method which allows reliable diagnosis or identification of fault conditions within an engine fuel system across the full range of operation of the vehicle's engine. It is a further object of the present invention to provide a diagnosis method that can diagnose a range of vehicle faults such as compression ratio errors, blow by errors, engine misfire and over-fuelling conditions. It is a yet further object of the present invention to provide a diagnosis method that can self-diagnose faults within the sensor system, for example sensor drift.

Statements of Invention

According to a first aspect of the present invention there is provided a A method of diagnosing faults within an engine system (1), the engine system comprising a plurality of cylinders, the method comprising:

monitoring (310) the output signal of one or more in-cylinder pressure sensors (3) within the engine system, each of the one or more in-cylinder pressure sensors being associated with a cylinder within the engine system;
determining (312) a pressure related parameter for a given cylinder having an associated in-cylinder pressure sensor; and
diagnosing (314) the presence of faults within the engine system on the basis of the pressure related parameter
wherein the pressure related parameter determined in the determining step is the top-dead-centre (TDC) position of the given cylinder and the diagnosing step (110, 122) comprises comparing the determined TDC position with predicted TDC position to derive a TDC offset value for the cylinder within the engine system
the method being characterised in that the diagnosing step is arranged to diagnose, for each cylinder, a cylinder blow-by error if the difference between the TDC offset value and a previous determined TDC offset value is below a first amount and a cylinder sensor drift condition (118) if the difference is above a second amount;
and the diagnosing step is arranged to end if the difference is within said amounts

The method may further comprise the verification of the presence of the cylinder sensor drift condition (118) by determining, when the engine system is in a motoring condition, the indicated mean effective pressure (IMEP) for the given cylinder and verifying a determined sensor drift error (118) if the IMEP value for the given cylinder is outside a predetermined range.

In a further aspect is provided an ECU arranged to diagnose faults within an engine system, the engine system comprising a plurality of cylinders, the ECU adapted to perform the methods above..

Brief Description of the Drawings

In order that the invention may be more readily understood, reference will now be made, by way of example, to the accompanying drawings in which:

Figure 1 shows a representation of an engine system;

Figure 2 shows observed sensor drift for an engine at cold idle;

Figure 3 shows observed sensor drift for an engine in a foot off driving condition;

Figure 4 is a flow chart showing a foot-off diagnosis method in accordance with an embodiment of the present invention;

Figure 5 is a plot of IMEP versus air mass flow showing the detection of a faulty pressure sensor;

Figure 6 a flow chart showing a further diagnosis method in accordance with an embodiment of the present invention;

Figure 7 is a plot of IMEP versus time showing the effects of a misfiring cylinder;

Figures 8 and 9 are general representations of an engine control unit suitable for use with the present invention and a flow chart representing the basic method according to the present invention;

Figure 10 shows pressure signal traces and TDC offset values for a faulty sensor and for a cylinder blow-by condition.

Detailed Description

In the following description and associated drawings like numerals are used to denote like features.
The following terms may also be referenced in the following description and associated drawings: IMEP - Indicated Mean Effective Pressure, used in this development for engine torque control (Bar) (Indicated engine torque = IMEP x Engine swept volume (constant)); CA50% - Crank angle position at 50% of cumulative heat release rate (here referred to as the Centre of Combustion Position) (Degree Crank Angle); V - Cylinder volume (variable) (cm$^3$); Q - Fuel mass or generated combustion heat; TDC - Top Dead Centre (Reference 0 Crank angle); ECU Electronic Control unit.
In a compression-ignition internal combustion engine, such as a diesel engine, combustion takes place within one or more combustion chambers or cylinders, each chamber being defined partly by a reciprocating piston and partly by the walls of a cylinder bore formed in a cylinder head. The piston slides within the cylinder so that, when the engine is running, the volume of the combustion chamber cyclically increases and decreases. When the combustion chamber is at its minimum volume, the piston is said to be at 'Top Dead Centre' (TDC), and when the combustion chamber is at its maximum volume, the piston is said to be at 'Bottom Dead Centre' (BDC).

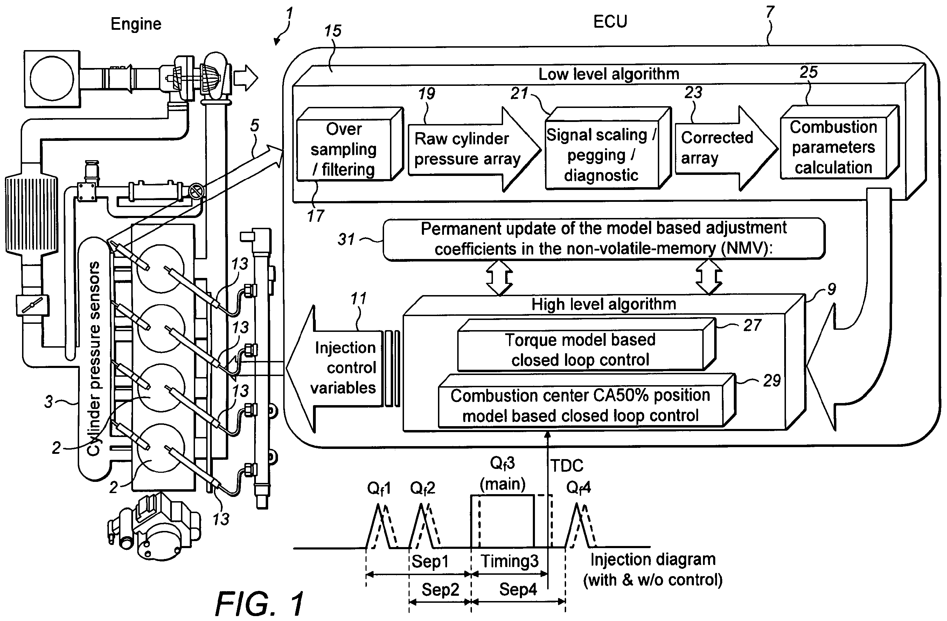

Figure 1 shows a representation of an engine system 1 described in the Applicant's co-pending European patent application 08168714.7. The engine system 1 comprises a plurality of cylinders 2. In-cylinder pressure measurements from cylinder pressure sensors 3 are fed (arrow 5) into the vehicle's engine control unit 7. The control method in accordance with the system described in the figure is generally represented by the "high level" algorithm box 9, the output of which are injection control variables 11 which are sent to the engine's injectors 13.
Prior to the sensor output 5 being used by the high level algorithm 9, a "low level" algorithm 15 cleans up the sensor data and calculates a number of combustion parameters which are then used by the high level algorithm 9.
In order to reduce the calculation load on the ECU and to enable the engine model 9 to calculate injection control variables sufficiently quickly at all engine speeds the in-cylinder pressure measurements may conveniently be over-sampled.
Within the low level algorithm 15 therefore the oversampled output of the sensors 3 is filtered by a filtering module 17 to produce a raw cylinder pressure array 19. The raw array 19 may then be passed to a scaling and diagnostic module 21 which performs pressure measurement pegging and other scaling functions in order to output a corrected pressure array 23. It is noted that the applicant's patent application EP1936157 describes a pressure pegging method that may be utilised here.
The corrected pressure array 23 is then sent to a combustion parameters calculation module 25 which calculates a number of combustion parameters as described below which may then be used by an engine model to control engine operation.
Parameters calculated in the module 25 may comprise: the indicated mean effective pressure (IMEP) in bar (it is noted that the indicated engine torque = IMEP engine x swept volume (a constant)); CA50%, the cumulative heat release rate (HRR); peak pressure and location of peak pressure; the pressure derivative with respect to crank angle, $DP/D\alpha$, for combustion noise calculations (in particular the max $DP/D\alpha$ and location of this maximum may be calculated).
The control method in accordance with the disclosure of EP Application 08168714.7 is, as noted above, generally represented by the "high level" algorithm box 9. The control method provides a mechanism for determining fuel quantities via a torque model 27 and for determining injection timings via a combustion centre position model 29. Both models predict injection parameters with reference to one or more mathematical functions (as described below). In order to maintain the accuracy of the various engine models 27, 29 the model coefficients are adjusted with reference to actual measured engine parameters. The adjusted model coefficients are permanently stored within the nonvolatile memory 31 of the ECU 7.

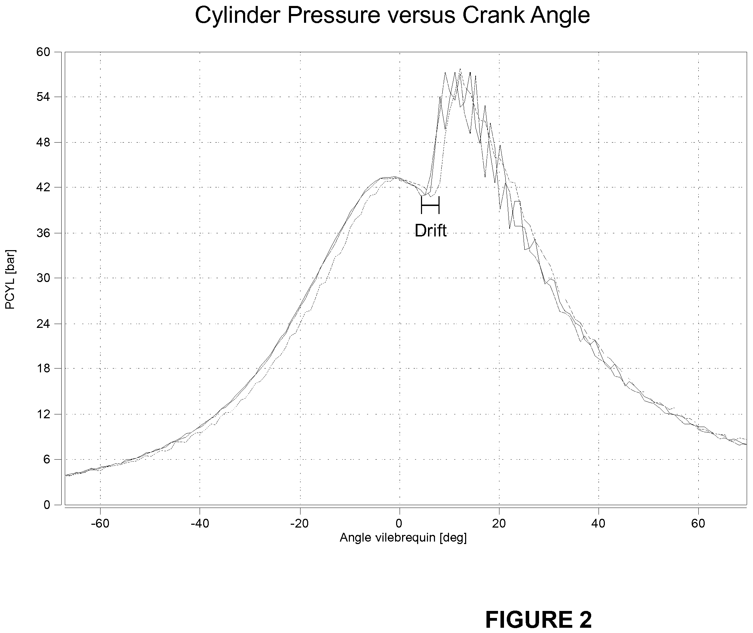

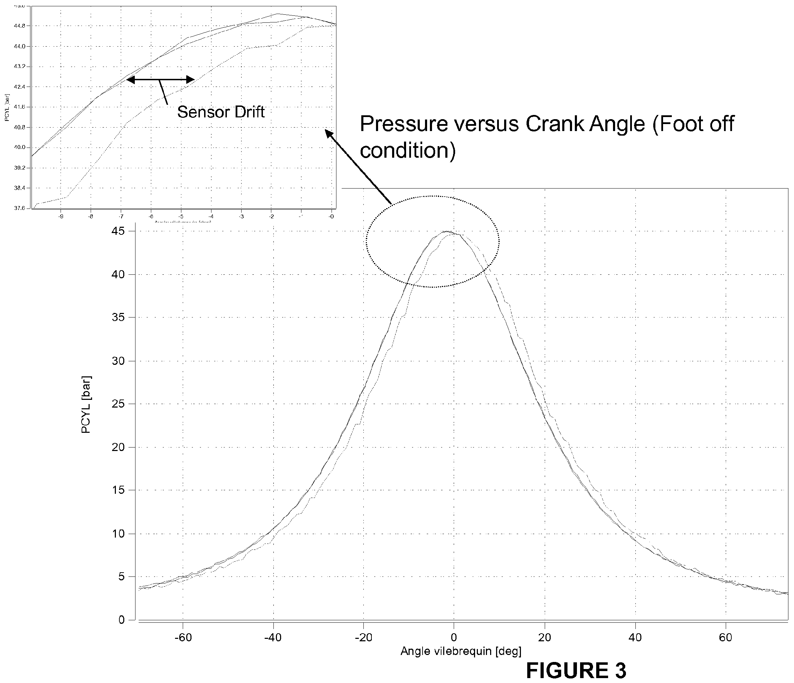

Figures 2 and 3 illustrate the problem of sensor drift that is observed on cylinder pressure sensors after periods of in service use. Figure 2 shows a number of traces of cylinder pressure versus crank angle for an engine system in a cold idle state. It can be seen that the various pressure curves do not line up and this represents a drift in the sensor readings that develops after long periods of use.

Figure 3 shows a similar trace for an engine system that is in a foot-off condition (i.e. a motoring condition). A portion of the figure has been enlarged and it can be seen that the sensor drift corresponds to an offset of a couple of degrees of crank angle at certain points on the pressure curve.

It is noted that the results shown in Figures 2 and 3 were derived from a test engine after durability testing. The same drift in the sensor output would also be experienced by in-service engines over time.

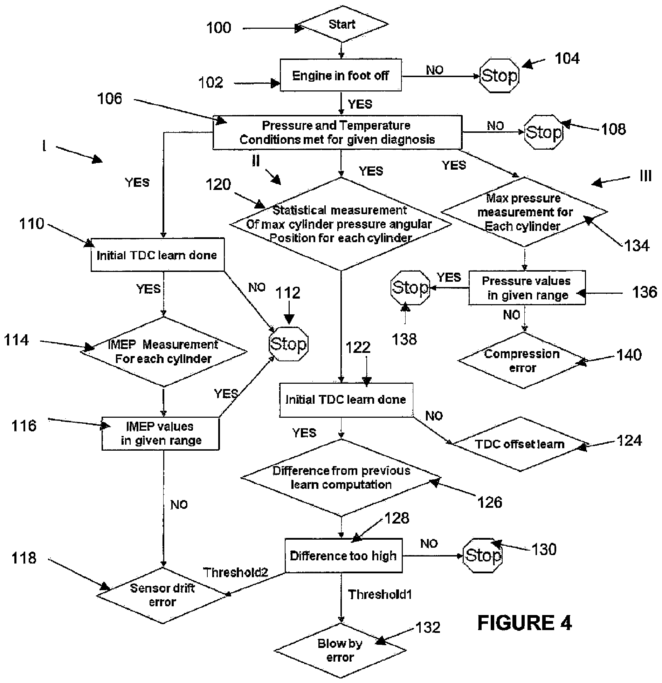

Figure 4 is a flow chart showing a diagnosis algorithm in accordance with an embodiment of the present invention for use when an engine system is motoring (i.e. a "foot off" condition).

In Step 100 the vehicle ECU initiates the diagnosis algorithm. This initiation could be in response to a driver or maintenance command or alternatively the algorithm could be run periodically.

In Step 102, the ECU performs a check to see if the engine is in a foot-off condition (in other words that the engine is motoring and no fuel is being supplied to the injectors). If the engine is not motoring then the process stops in Step 104.

In Step 106 the ECU checks to make sure that pressure and temperature conditions within the engine are suitable to run the diagnosis algorithm. This step essentially checks that the engine has been in a foot off condition for long enough to allow the diagnosis to run. If the pressure/temperature conditions are not met then the process stops in Step 108.

If the pressure/temperature conditions are met then the ECU may run one of three basic sub-processes, *I, II* or *III*. Process *I* is designed to diagnose sensor drift errors. Process *II* can either diagnose sensor drift or blow-by errors. Process *III* can diagnose compression errors within the cylinders of the engine.

In process *I*, the ECU first checks in Step 110 whether the output of the pressure sensors has been used to determine the true top dead centre position of the engine cylinders. If a "TDC learn" has not been performed then the process stops in Step 112.

If the TDC position of each cylinder is known then the process moves to step 114 in which the IMEP value for each cylinder is calculated from the pressure sensors. The IMEP value may be calculated by taking pressure values in the interval from 180º of crank angle before TDC to 180º of crank angle after TDC (i.e. the compression and power strokes). IMEP may then be calculated in accordance with the following equation:

$$IMEP_{hp} = \frac{1}{V} \int_{-180CAD}^{180CAD} PdV$$

where CAD= crank angle degree, V is the volume within the cylinder, P is the measured pressure value and IMEP$_{hp}$ is the indicated mean effective pressure of the high pressure cycle (i.e. compression to power stroke).

In Step 116, the ECU determines if the calculated IMEP for each cylinder is within a pre-defined range. If all cylinders are within standard operating ranges then the process stops in Step 112.

If one or more cylinders shows an IMEP reading the is outside of the given range then the process returns a sensor drift error in Step 118.

In process *II*, the ECU initially undertakes, in Step 120, a measurement of the maximum cylinder pressure with respect to angular position for each cylinder. This is a statistical measurement performed over a number of engine cycles. This step determines the effective top dead centre position of each cylinder.

In Step 122, the ECU checks to see if the measured TDC position in Step 120 has been compared to the expected TDC position for each cylinder (it is noted that the expected TDC position may be pre-loaded and stored on the ECU). If the offset from the expected TDC position has not yet been determined then, in Step 124, the ECU determines the offset between the measured and expected values. It is noted that due to heat losses the maximum pressure in a cylinder of a motoring engine is approximately 1 crank angle degree before the geometric top dead centre of the cylinder. The offset that is calculated by the ECU is therefore with respect to the thermodynamic TDC position (1º crank angle before geometric TDC).

If an initial offset between the measured and expected TDC positions has been calculated then the diagnosis process moves to Step 126 in which the difference from the previous offset calculation is determined for each cylinder.

In Step 128, the variation in the offset is assessed for each cylinder. If the variation is within pre-defined limits then the diagnosis process ends in Step 130.

If the offset variation for any cylinder is below a first threshold/"varies by a first amount" (e.g. if the TDC offset drops below 0.5 crank angle degrees from the initial learn TDC offset) then the ECU may determine that there is a blow-by error in the cylinder under evaluation (Step 132). If the offset variation is above the second threshold/"varies by a second amount" (e.g. if the TDC offset rises above 0.5 crank angle degrees from the initial learn TDC offset) then a sensor drift error is output (Step 118) for that cylinder.

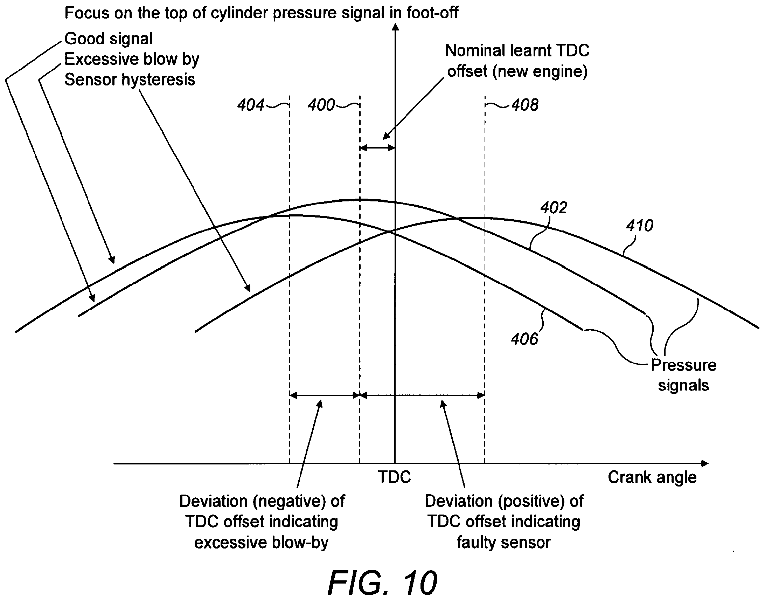

The determination of a sensor drift error or a blow-by error is also shown in Figure 10. The vertical axis in Figure 10 represents the expected TDC position. The initial offset between the expected and measured TDC positions is shown at 400. An engine system operating within normal parameters produces the pressure signal 402 which has its maximum at the initial offset position.

The TDC offset may be periodically re-calculated. If the TDC offset moves in a negative crank angle direction relative to the initial TDC offset position (to position 404) then this indicates a cylinder blow-by condition. The corresponding pressure signal trace for this condition is shown at trace 406.

If the TDC offset moves in a positive crank angle direction relative to the initial TDC offset position (to position 408) then this indicates a cylinder sensor drift condition. The corresponding pressure signal trace for this condition is shown at trace 410.

In process *III* the ECU initially, in Step 134, determines the maximum pressure measurement for each cylinder and in Step 136 determines if the pressure values are within a pre-determined range. If the values are in range then the diagnosis process stops in Step 138. If the pressure value on any cylinder is outside of the pre-determined range then the diagnosis process returns a compression ratio error for the cylinder in question (Step 140).

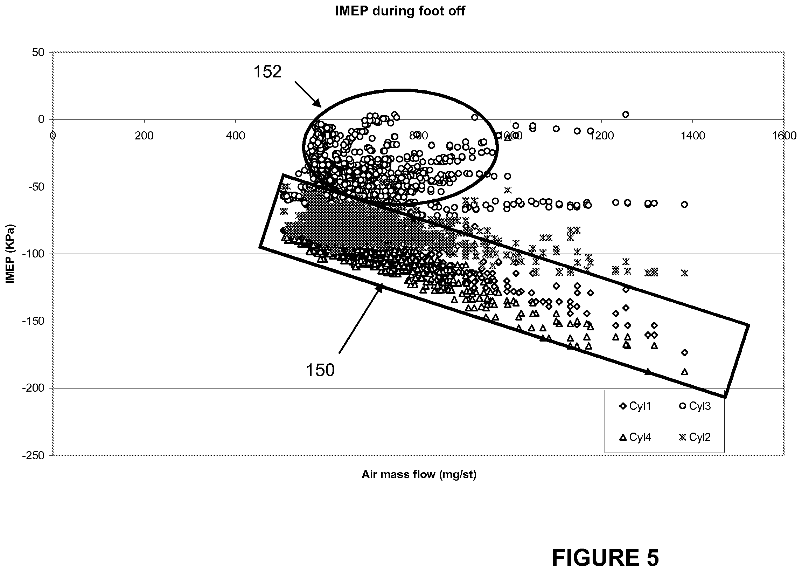

Figure 5 shows an example of cylinder pressure sensor drift that may be detected by the diagnosis method according to an embodiment of the present invention. The figure illustrates the results of the analysis of computed IMEP versus air mass flow in foot off driving conditions with coolant temperature in the range 0-80ºC. It can be seen that three of the four cylinder sensors return IMEP readings within the valid, boxed region 150. The sensor on cylinder 3 however is defective due to a wrongly measured IMEP (see circled area 152).

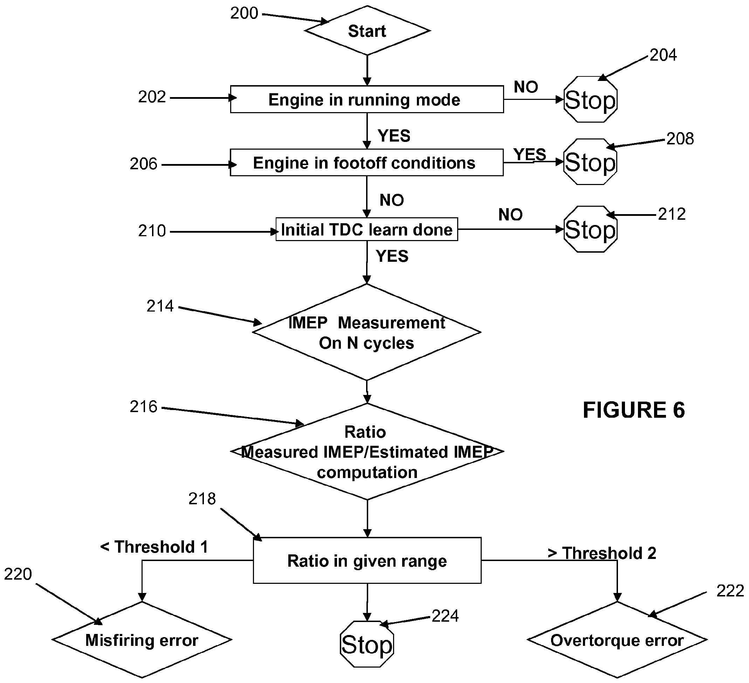

Figure 6 illustrates the diagnosis process that may be performed during normal operating conditions (i.e. when the injectors are receiving and injecting fuel into the engine).

In Step 200 the diagnosis process is started and in Step 202 the ECU checks that the engine is in a running mode. If no then the diagnostic process ends in Step 104. The ECU then checks, in Step 106, whether the vehicle is in a motoring (foot off condition). If the engine is motoring then the process terminates in Step 108. Finally, the ECU checks, in Step 110, whether the top dead centre position has been determined. If TDC has not been determined then the process terminates in Step 112.

In Step 214, the pressure signals from the pressure sensors in each cylinder are used to measure the IMEP within each cylinder over time, i.e. over N cycles. In Step 216 a ratio of measured to estimated IMEP is calculated. It is therefore noted that in Step 216 an estimated IMEP value based on the current engine operating conditions is either calculated or received by the ECU 7. It is noted that the Applicant's co-pending European patent application 08168714.7 relates to an engine control model in which parameters such as the IMEP for each cylinder are calculated.

In Step 218 the ECU checks whether the ratio of measured to estimated IMEP is within a given range. If the ratio is less than a first threshold value (Step 220) then a misfiring fault is returned for the cylinder in question. If the ratio is determined to exceed a second threshold (Step 222) then an over fuelling fault is returned for the cylinder in question. If the ratio is within the predetermined allowable range then the diagnosis process terminates in Step 224.

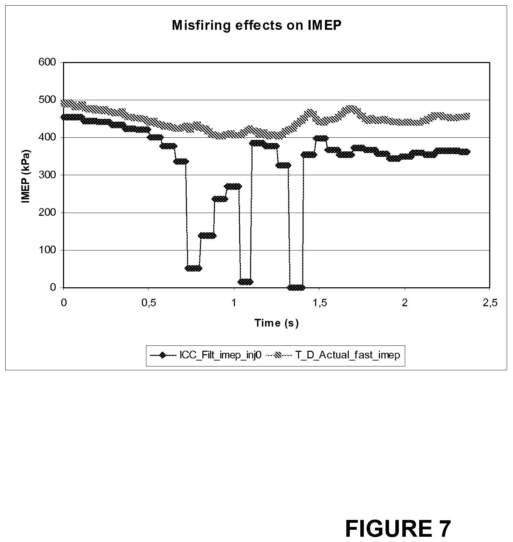

Figure 7 represents a misfiring error on a cylinder (IMEP variations in the bottom trace denote the effects of a misfire).

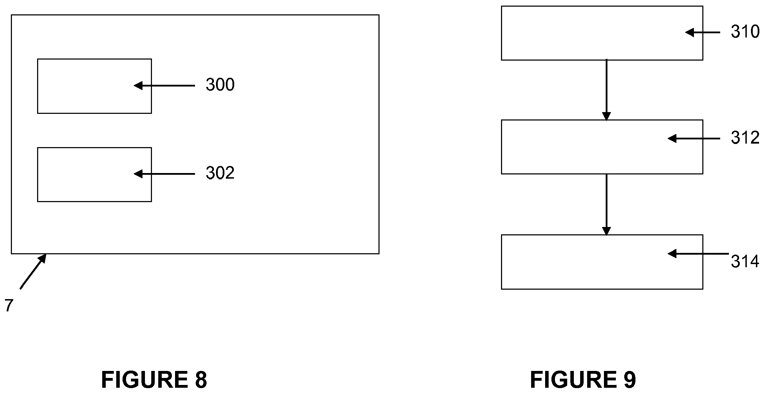

Figures 8 and 9 are general representations of an engine control unit suitable for use with the present invention and a flow chart representing the basic method according to the present invention.

In Figure 8 an ECU 7 comprises monitoring means 300 and processing means 302. In Figure 9, the method according to an embodiment of the present invention comprises monitoring 310 the output of in-cylinder pressure sensors, determining 312 a pressure related parameter and diagnosing 314 faults within the engine system.

It will be understood that the embodiments described above are given by way of example only and are not intended to limit the invention, the scope of which is defined in the appended claims. It will also be understood that the embodiments described may be used individually or in combination.

## Claims

1. A method of diagnosing faults within an engine system (1), the engine system comprising a plurality of cylinders, the method comprising:

   monitoring (310) the output signal of one or more in-cylinder pressure sensors (3) within the engine system, each of the one or more in-cylinder pressure sensors being associated with a cylinder within the engine system;
   determining (312) a pressure related parameter for a given cylinder having an associated in-cylinder pressure sensor; and
   diagnosing (314) the presence of faults within the engine system on the basis of the pressure related parameter

wherein the pressure related parameter determined in the determining step is the top-dead-centre (TDC) position of the given cylinder and the diagnosing step (110, 122) comprises comparing the determined TDC position with predicted TDC position to derive a TDC offset value for the cylinder within the engine system the method being **characterised in that** the diagnosing step is arranged to diagnose, for each cylinder, a cylinder blow-by error if the difference between the TDC offset value and a previous determined TDC offset value is below a first amount and a cylinder sensor drift condition (118) if the difference is above a second amount; and the diagnosing step is arranged to end if the difference is within said amounts

2. A method as claimed in Claim 1, further comprising the verification of the presence of the cylinder sensor drift condition (118) by determining, when the engine system is in a motoring condition, the indicated mean effective pressure (IMEP) for the given cylinder and verifying a determined sensor drift error (118) if the IMEP value for the given cylinder is outside a predetermined range.

3. An ECU arranged to diagnose faults within an engine system, the engine system comprising a plurality of cylinders, the ECU being adapted to perform the methods claimed in claims 1 to 2 .

**Patentansprüche**

1. Verfahren zum Diagnostizieren von Fehlern in einem Motorsystem (1), wobei das Motorsystem eine Vielzahl von Zylindern aufweist, wobei das Verfahren aufweist:

Überwachen (310) des Ausgangssignals eines oder mehrerer Drucksensoren (3) in einem Zylinder in dem Motorsystem, wobei jeder des einen oder mehreren im-Zylinder-Drucksensoren mit einem Zylinder in dem Motorsystem assoziiert ist;
Bestimmen (312) eines druckbezogenen Parameters für einen gegebenen Zylinder mit einem assoziierten Drucksensor in dem Zylinder; und
Diagnostizieren (314) des Vorhandenseins von Fehlern in dem Motorsystem auf der Basis des druckbezogenen Parameters,
wobei der in dem Bestimmungsschritt bestimmte druckbezogene Parameter die Position des oberen Totpunkts (TDC - top-dead-centre) des gegebenen Zylinders ist und der Diagnoseschritt (110, 122) ein Vergleichen der bestimmten TDC-Position mit einer vorhergesagten TDC-Position aufweist, um einen TDC-Versatz-Wert für den Zylinder in dem Motorsystem abzuleiten,
wobei das Verfahren **dadurch gekennzeichnet ist, dass** der Diagnoseschritt ausgebildet ist zum Diagnostizieren, für jeden Zylinder, eines Zylinder-Blowby-Fehlers, wenn die Differenz zwischen dem TDC-Versatz-Wert und einem zuvor bestimmten TDC-Versatz-Wert unter einem ersten Betrag ist, und eines Zylindersensor-Drift-Zustands (118), wenn die Differenz über einem zweiten Betrag ist;
und der Diagnoseschritt ausgebildet ist, zu enden, wenn die Differenz innerhalb der Beträge ist.

2. Ein Verfahren gemäß Anspruch 1, das weiter aufweist die Verifizierung des Vorhandenseins des Zylindersensor-Drift-Zustand (118) durch Bestimmen, wenn das Motorsystem in einem Motorbetriebszustand ist, des angegeben Mitteldrucks (IMEP - indicated mean effective pressure) für den gegebenen Zylinder und Verifizieren eines bestimmten Sensor-Drift-Fehlers (118), wenn der IMEP-Wert für den gegebenen Zylinder außerhalb eines vorgegebenen Bereichs ist.

3. ECU, die zum Diagnostizieren von Fehlern in einem Motorsystem ausgebildet ist, wobei das Motorsystem eine Vielzahl von Zylindern aufweist, wobei die ECU ausgebildet ist zum Durchführen der in den Ansprüchen 1 bis 2 beanspruchten Verfahren.

**Revendications**

1. Procédé de diagnostic de dysfonctionnements à l'intérieur d'un système de moteur (1), le système de moteur comprenant une pluralité de cylindres, le procédé comprenant les étapes consistant à :

surveiller (310) le signal de sortie d'un ou de plusieurs capteurs de pression intégrés aux cylindres (3) à l'intérieur du système de moteur, chacun desdits un ou plusieurs capteurs de pression intégrés aux cylindres étant associé à un cylindre à l'intérieur du système de moteur ;
déterminer (312) un paramètre en relation à la pression pour un cylindre donné ayant un capteur de pression intégré au cylindre associé ; et
diagnostiquer (314) la présence de dysfonctionnements à l'intérieur du système de moteur sur la base du paramètre en relation à la pression, dans lequel le paramètre en relation à la pression déterminée dans l'étape de détermination est la position au point mort haut (TDC) du cylindre donné, et l'étape de diagnostic (110, 122) comprend la comparaison de la position TDC déterminée à la position TDC prédite pour dériver une valeur de décalage TDC pour le cylindre à l'intérieur du système de moteur, le procédé étant **caractérisé en ce que** l'étape de diagnostic est prévue pour diagnostiquer, pour chaque cylindre, une erreur de fuite de cylindre si la différence entre la valeur de décalage TDC et une valeur de décalage TDC déterminée antérieure est en dessous d'une première quantité, et une condition de dérive de capteur de cylindre (118) si la différence est au-dessus d'une deuxième quantité ; et l'étape de diagnostic est prévue pour se terminer si la différence est à l'intérieure desdites quantités.

2. Procédé selon la revendication 1, comprenant en outre l'étape consistant à vérifier la présence de la condition de dérive de capteur de cylindre (118) en déterminant, quand le système de moteur est dans une condition d'entraînement, la pression moyenne effective indiquée (IMEP) pour le cylindre donné, et à vérifier une erreur de dérive de capteur déterminée (118) si la valeur IMEP pour le cylindre donné est en dehors d'une plage prédéterminée.

3. Unité centrale électronique (ECU) agencée pour diagnostiquer des dysfonctionnements à l'intérieur d'un système de moteur, le système de moteur comprenant une pluralité de cylindres, l'ECU étant adaptée pour mettre en œuvre le procédé selon les revendications 1 à 2.

**FIG. 1**

Cylinder Pressure versus Crank Angle

FIGURE 2

Pressure versus Crank Angle (Foot off condition)

FIGURE 3

**FIGURE 4**

FIGURE 5

**FIGURE 6**

**Misfiring effects on IMEP**

FIGURE 7

EP 2 556 231 B1

300

302

7

**FIGURE 8**

310

312

314

**FIGURE 9**

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02101220 A1
- EP 08168714

- EP 1936157 A